# EUROPÄISCHE PATENTSCHRIFT

(11) **EP 4 075 322 B1**
(45) Veröffentlichungstag und Bekanntmachung des Hinweises auf die Patenterteilung: **26.06.2024**
(21) Anmeldenummer: 22020169.3
(22) Anmeldetag: 13.04.2022
(51) Int. Cl.: G06K 7/10

(54) **VERFAHREN ZUR QUALITÄTSKONTROLLE EINER METALLISCHEN FOLIE EINES KARTENKÖRPERS**
METHOD FOR QUALITY CONTROL OF A METALLIC FOIL OF A CARD BODY
PROCÉDÉ DE CONTRÔLE DE LA QUALITÉ D'UNE FEUILLE MÉTALLIQUE D'UN CORPS DE CARTE

(30) Priorität: 14.04.2021 DE 102021001964
(43) Veröffentlichungstag der Anmeldung: 19.10.2022
(73) Patentinhaber: Giesecke+Devrient ePayments GmbH, 81677 München (DE)
(72) Erfinder: Baldischweiler, Michael, 81825 München (DE)
(74) Vertreter: Giesecke+Devrient IP

(56) Entgegenhaltungen:
- EP-A1- 2 815 387
- DE-A1-102006 025 356
- DE-A1-102009 052 585

## Beschreibung

Die Erfindung betrifft ein Verfahren zur Qualitätskontrolle einer metallischen Folie eines Kartenkörpers.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird in eine Kavität oder Modulöffnung des Kartenkörpers eingesetzt.

Im Folgenden werden Chipmodule oder Chipkarten mit integrierter Spule betrachtet, welche eine berührungslose oder kontaktlose Kommunikation ermöglichen. Beispielsweise können Chipkartencontroller mit RFID-Funktionalität eingesetzt werden. Die Spule bildet mit einem zusätzlichen Kondensator einen Schwingkreis auf dem Chipmodul.

Es können zudem Kartenkörper mit Dual Interface (DI)-Funktionalität, bei dem der Kartenkörper zum Teil oder vollständig aus Metall besteht. Die Funktionsweise einer solchen Karte besteht darin, dass ein Chipmodul verwendet wird, das selbst eine Spule enthält (Coil On Modul). Diese Spule koppelt auf den metallischen Kartenkörper.

Insbesondere werden Chipkarten betrachtet, die zusätzlich über mindestens eine metallische Folie im Kartenaufbau verfügen. Der Begriff metallische Folie umfasst eine vollmetallische Folie mit einer einzelnen oder mehreren Metallschichten und eine metallisierte Folie, bei der ein Substrat oder Trägerelement zum Beispiel aus einem Kunststoff mit einer oder mehreren metallischen Schichten bedeckt ist. Das Substrat kann eine Kunststoffträgerfolie zum Beispiel aus PET sein, auf der mittels einer Bedampfung zum Beispiel mit Aluminium eine dünne Beschichtung entsteht.

Eine derartige Folie wird in den Kartenkörper eingebracht, um bestimmte optische Effekte zu erreichen. Es existieren Schwierigkeiten hinsichtlich der Qualifizierung bzw. der ständigen Qualitätskontrolle dieses Materials. Bis jetzt wird hier ein rein optisches Verfahren herangezogen. Dabei wird direkt nach der Beschichtung die optische Durchlässigkeit per Hand gemessen, was bei dünnen Folien schwierig und unzuverlässig ist.

EP 2 815 387 A1 offenbart ebenfalls ein Verfahren zur Qualitätskontrolle eines Kartenkörpers für eine Chipkarte.

Aufgabe der vorliegenden Erfindung ist es daher, die Kontrolle einer derartigen Folie zu verbessern.

Diese Aufgabe wird durch ein Verfahren zur Qualitätskontrolle einer metallischen Folie eines Kartenkörpers gemäß dem unabhängigen Patentanspruch gelöst. Ausgestaltungen und Weiterbildungen der Erfindung sind in den abhängigen Ansprüchen angegeben.

Ein erfindungsgemäßes Verfahren zur Qualitätskontrolle einer metallischen Folie eines Kartenkörpers für eine Chipkarte umfasst die folgenden Schritte:
- Anordnen eines Referenz- Schwingkreises aufweisend eine Spule an einem Messkopf eines Impuls-Messgeräts, das zum Aussenden eines Impulses einer elektromagnetischen Schwingung und zum Erfassen einer Schwingungsantwort der Spule in Antwort auf den Impuls eingerichtet ist;
- Kalibrieren des Referenz- Schwingkreises durch Aussenden eines Impulses, Erfassen einer Schwingungsantwort der Spule in Antwort auf den Impuls und Bestimmen einer Kalibrierungsgüte aus der Schwingungsantwort;
- Relatives Bewegen des Referenz- Schwingkreises zu einer Oberfläche der metallischen Folie;
- Aussenden eines Impulses, Erfassen einer Schwingungsantwort der Spule in Antwort auf den Impuls und Bestimmen einer Güte aus der Schwingungsantwort; und
- Ermitteln einer Dicke und/oder Dichte der metallischen Folie basierend auf der bestimmten Güte.

Ein Grundgedanke der vorliegenden Erfindung besteht darin, ein Impuls-Messgerät zur Vermessung von Spulen, Antennen oder Chipkarten für die Qualitätskontrolle einer metallischen Folie zu verwenden.

Unter einem Schwingkreis wird hier auch ein offener Schwingkreis mit nur einer Spule verstanden. Der Schwingkreis wird dann durch die Kapazität der zu prüfenden metallischen Folie geschlossen. Dadurch kann die Empfindlichkeit oder Messauflösung gesteigert werden und zwar auf Werte bis im Bereich von um etwa 1 pF.

Grundsätzlich kann ein Prüfverfahren ein Anregen der zu prüfenden Spule zur Schwingung, ein Erfassen der freien, gedämpften Schwingung der Spule in Antwort auf die Anregung sowie ein Auswerten der erfassten Schwingung umfassen.

Dabei wird der Umstand ausgenutzt, dass das Vorhandensein einer metallischen Folie an einer Chipkarte die Resonanzfrequenz und auch die Güte der Spule beziehungsweise des Schwingkreises der Karte ändert. Die Folie beeinflusst den Energieeintrag des Messimpulses. Es spielt hier keine Rolle, ob die Folie zwischen Messkopf und Karte liegt oder ob die Folie unter der Karte liegt. Das Dämpfungsverhalten ist immer gleich.

Als Messgerät kann zum Beispiel ein Dirac-Messsystem verwendet werden. Dabei wird der Messkopf so modifiziert, dass zum Beispiel eine Karte mit RFID-Eigenschaft fest unter dem Messkopf angebracht wird. Mittel einer einfachen Referenzkarte wird eine Messung auf einem Folienbogen hinsichtlich der Qualität und Dichte der Folie ermöglicht.

Hier erfolgt eine Vermessung der Produktionsqualität von Fullface-Folien (FFF) wie zum Beispiel Folien, die mit einer metallischen Schicht bedampft sind oder mit einem anderen Verfahren metallisch beschichtet sind. Zum Beispiel können mittels Spatterverfahren Metallpartikel auf Folien abgeschieden werden.

Das hier vorgeschlagene Verfahren hat den Vorteil, dass Folien einfach, schnell und maschinell untersucht oder geprüft werden können. Zudem können nun auch beschichtete oder laminierte metallische Folien geprüft werden, was die Handhabung von sehr dünnen metallischen Folien zum Beispiel mit einer Stärke von 30 µm bis 40 µm ermöglicht. Da diese dünnen metallischen Folien nicht einzeln handhabbar sind, werden zusätzliche Folien auf beiden Seiten der beschichteten Folie auflaminiert. Mit der hier vorgeschlagenen elektromagnetischen Prüfung sind auch laminierte metallische Folien prüfbar.

Es kann vorgesehen sein, dass ein Ermitteln einer Dicke und/oder Dichte der metallischen Folie basierend auf der bestimmten Güte relativ zu der Kalibrierungsgüte erfolgt. Dies erlaubt einen Vergleich der einzelnen Messpunkte jeweils in Bezug auf die Kalibrierungsmessung oder auch der einzelnen Messpunkte untereinander. So kann eine relative Abweichung der einzelnen Messpunkte und daraus eine Dicke und/ oder Dichte der metallischen Folie ermittelt werden.

Es kann ferner vorgesehen sein, dass ein Ermitteln einer Dicke und/oder Dichte der metallischen Folie absolut basierend auf der bestimmten Güte und einer angegebenen Dicke und/oder Dichte der metallischen Folie erfolgt. Auf diese Weise können absolute Werte der Dicke und/oder Dichte der metallischen Folie bestimmt werden. So können Angaben zu der Dicke und/oder Dichte der metallischen Folie eines oder mehrerer Referenzpunkte gegeben sein. An diesem oder diesen Referenzpunkten erfolgt dann das Kalibrieren der Referenz-Chipkarte. Mittels einer Umrechnung über die Abweichung der Messwerte an den Messpunkten kann dann die Dicke und/ oder Dichte der metallischen Folie an allen Messpunkten bestimmt werden.

Es kann vorgesehen sein, dass die Güte der Spule aus einem Abklingkoeffizienten der Schwingungsantwort ermittelt wird. Aus dem Abklingkoeffizienten δ kann die Güte der Spule oder Antennenspule ermittelt werden. Je länger der Abklingvorgang dauert, desto höher ist die Güte des entsprechenden Schwingkreises. Somit erlaubt eine Auswertung der freien gedämpften Schwingung der Spule, das heißt deren Ausschwingen unmittelbar nach der Anregung, die Güte und auch die Eigenresonanzfrequenz der Spule zu bestimmen.

Es kann ferner vorgesehen sein, dass das Aussenden und das Erfassen kontaktlos erfolgt. Da elektromagnetische Impulse verwendet werden, kann die Folie aus einem definierten Abstand, der Messungen vergleichbar macht, gemessen werden. Die Folie bleibt somit ohne Kontakt, so dass keine Beeinträchtigung der Folie stattfindet.

Es kann vorgesehen sein, dass das relative Bewegen in einer Bewegungsroute über die metallische Folie erfolgt und dass in kontinuierlichen zeitlichen Abständen ein Aussenden und Erfassen durchgeführt und das Ergebnis gesichert wird. Das Messsystem kann zum Beispiel in einen Kontinuos Mode gesetzt werden, in dem alle 100 ms eine Messung durchgeführt und das Ergebnis abgespeichert wird. Damit die Folie qualitativ über die gesamte Fläche vermessen wird, werden alle Richtungen getestet, um eine komplette Abdeckung aller gewünschten Richtungen zu erhalten.

Es kann ferner vorgesehen sein, dass die metallische Folie zur Messung auf einer Unterlage mit einer Dielektrizitätszahl kleiner 10, vorzugsweise kleiner 5, angeordnet wird. So kann eine POM-Platte als Unterlage verwendet werden. Dieses Material hat eine sehr kleine Dielektrizitätszahl von etwa 4, die zudem konstant über die ganze Plattenoberfläche ist. Damit wird eine definierte Umgebung geschaffen, welche die Testqualität erhöht und vergleichbarer macht. Ebenso ist es möglich, zwei oder mehr Fäden, Schnüre oder ähnliches zu spannen und dann die metallische Folie darüber zu führen. Auf diese Weise befindet sich fast nur Luft unter oder hinter der Folie und die Dielektrizitätszahl kann noch weiter gesenkt werden. Besonders geeignet ist dies, wenn die metallische Folie als Rollenmaterial vorliegt.

Es kann vorgesehen sein, dass die metallische Folie auf mindestens einer der beiden Seiten mit einer Folie bedeckt ist. Durch eine derartige Laminierung werden auch sehr dünne metallische Folien handhabbar und bleiben trotzdem prüfbar.

Es kann ferner vorgesehen sein, dass die Spule Teil eines RFID-Transponders ist. Bedingt durch die große Verbreitung sind geeignete Messsysteme verfügbar und genaue und vergleichbare Messergebnisse zu erzielen.

Es kann vorgesehen sein, dass die Messung auf einer Rückseite der metallischen Folie erfolgt. Um keine Kratzer auf der Oberfläche der Folie zu erzeugen, kann es vorteilhaft sein, dass sie mit der Rückseite nach oben vermessen wird. Auf diese Weise ist die empfindliche Oberseite geschützt vor Beschädigungen und falls der Messkopf direkt auf der Folie verfahren werden soll.

Es kann ferner vorgesehen sein, dass die metallische Folie in einer Vorschubrichtung über zwei oder mehr dünne Halterungen bewegt wird, dass das relative Bewegen in einem Winkel zu der Vorschubrichtung erfolgt und dass in kontinuierlichen zeitlichen Abständen ein Aussenden und Erfassen durchgeführt und das Ergebnis gesichert wird. Auf diese Weise können zwei oder mehr Fäden, Schnüre oder ähnliches gespannt werden und dann die metallische Folie darüber geführt werden. So befindet sich fast nur Luft unter oder hinter der Folie und die Dielektrizitätszahl kann noch weiter gesenkt werden. Besonders geeignet ist dies, wenn die metallische Folie als Rollenmaterial vorliegt.

Es kann vorgesehen sein, dass der Referenz-Schwingkreis eine Spule, einen Kondensator und einen Widerstand aufweist. So kann ein definierter Schwingkreis geschaffen werden, was die Vergleichbarkeit von Messungen vereinfachen kann.

Es kann ferner vorgesehen sein, dass der Referenz-Schwingkreis eine Spule und einen Kondensator einer integrierten Schaltung der Chipkarte aufweist. So kann der Referenz-Schwingkreis als Referenz-Chipkarte ausgestaltet sein. So können bei dem Messen beziehungsweise der Qualitätskontrolle identische elektromagnetische Eigenschaften wie auf einer Chipkarte, die mit der zu prüfenden Folie beschichtet wird, geschaffen werden.

Die vorliegende Erfindung wird nachfolgend mit Bezug auf die beiliegenden Zeichnungen beispielhaft beschrieben. Darin zeigen
- Fig. 1:: eine Draufsicht einer Chipkarte;
- Fig. 2:: ein Ersatzschaltbild eines Chipmoduls der Chipkarte mit einem Schwingkreis mit einer inneren Kapazität eines Chips;
- Fig. 3:: ein Ersatzschaltbild eines Chipmoduls der Chipkarte mit einem offenen Schwingkreis;
- Fig. 4:: ein Ersatzschaltbild eines Chipmoduls der Chipkarte mit einem Schwingkreis mit Kondensator, Spule und Widerstand;
- Fig. 5:: eine prinzipielle Darstellung eines Messgeräts zur Qualitätskontrolle einer metallischen Folie; und
- Fig. 6:: ein Flussdiagramm eines Verfahrens zur Qualitätskontrolle einer metallischen Folie.

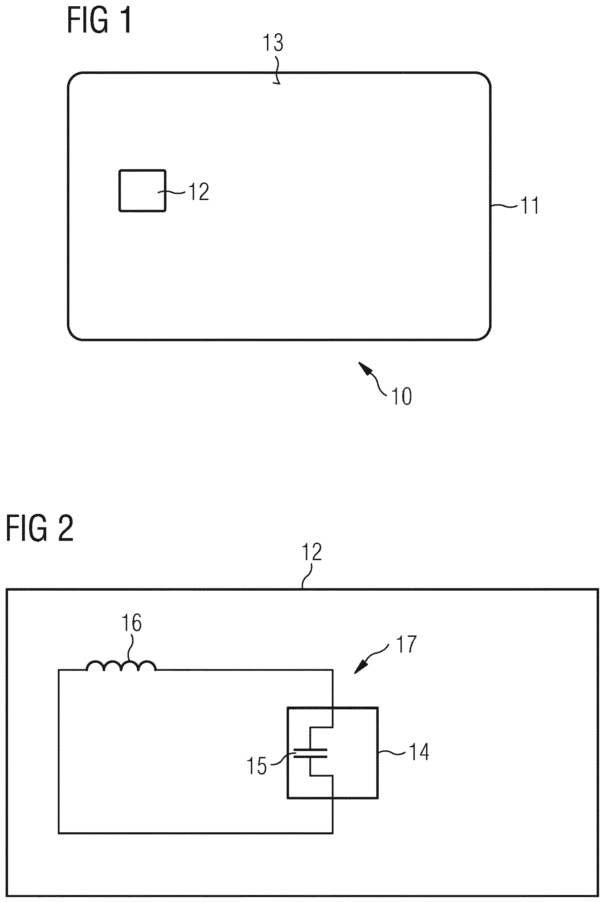

Fig. 1 zeigt eine Chipkarte 10 mit einem Kartenkörper 11. Der Kartenkörper 11 kann aus einem Kunststoff wie PVC, Polycarbonat oder ähnlichem bestehen. Die Dicke des Kartenkörpers 11 kann zum Beispiel zwischen 50 µm und 920 µm betragen.

Die Chipkarte 10 umfasst des Weiteren ein Chipmodul 12, das in eine Hauptfläche 13 des Kartenkörpers 11 oder der Chipkarte 10 eingesetzt ist. Das Chipmodul 12 kann in eine Modulöffnung oder Kavität eingesetzt sein. Die Kavität kann ein mittiges Sackloch und einen umlaufenden Randbereich umfassen. Hier ist die Kavität durch das eingesetzte Chipmodul 12 verdeckt. Das Chipmodul 12 kann in der Kavität verklebt sein.

Das Chipmodul 12 umfasst eine Spule, die auf einem hier nicht dargestellten Modultape angeordnet sein kann. Die Spule kann etwa 12 bis 16 Windungen aufweisen, die hier konzentrisch um einen Chip oder einen elektronischen Schaltkreis des Chipmoduls 12 verlaufen. Die Breite einer Windung kann 50 µm bis 70 µm betragen und der Abstand zwischen zwei Windungen kann 100 µm betragen. Die Windungen können Kupferdicken bis zu etwa 30 µm haben. Mit einer derartigen Spule können maximal 2,5 µH erreicht werden.

Der Chip kann zum Beispiel in Form einer integrierten Schaltung realisiert sein und ist zum Beispiel in einer Vergussmasse an einer Unterseite des Chipmoduls 12 befestigt. Über die Spule wird der Chip mit Energie und/oder Signalen versorgt. So kann ein elektromagnetisches Feld in die Spule eingekoppelt werden. Beispielsweise kann der Chip ein Chipkartencontroller mit RFID-Funktionalität sein oder diesen enthalten.

Fig. 2 zeigt ein Ersatzschaltbild des Chipmoduls 12 der Chipkarte 10. Das Chipmodul 12 umfasst den Chip 14 zum Beispiel in Form einer integrierten Schaltung. Der Chip 14 kann zum Beispiel auf das Chipmodul 12 aufgelötet sein oder per Flip-Chip-Montage auf das Chipmodul 12 aufgebracht worden sein. Der Chip 14 enthält einen Kartencontroller für die Chipkarte 10. Der Chip 14 enthält üblicherweise einen Prozessor zum Ausführen von Steuerungsfunktionen für die Chipkarte 10 und für die Kommunikation und zum Ausführen von Rechenoperationen zum Beispiel für Sicherheitsfunktionen. Zudem enthält der Chip 14 einen Speicherbereich zum Ablegen und/ oder Verfügbarmachen von Daten.

Der Chip 14 enthält ferner einen Kondensator 15 mit einer Kapazität von zum Beispiel 78 pF. Die Spule 16 ist parallel zu dem Chip 14 geschaltet und hat hier eine maximale Induktivität von 2,5 µH.

Die Spule 16 und der Kondensator 15 des Chips 14 bilden einen Schwingkreis 17. Mit Hilfe dieses Schwingkreises 17 kann das Chipmodul 12 mit einem zur Chipkarte 10 externen Lesegerät oder auch einer Messeinrichtung kommunizieren. Das Lesegerät trägt über ein elektromagnetisches Feld Energie in die Spule 16 ein, wodurch der Chip 14 aktiviert wird.

Diese metallische oder metallisierte Folie kann sehr dünn sein, zum Beispiel mit einer Stärke von 30 µm bis 40 µm. Bevor diese Folie auf die Chipkarte 10 aufgebracht wird, muss sie einer Qualitätskontrolle unterzogen werden. Bei dieser Qualitätskontrolle können die optischen oder mechanischen Eigenschaften wie die Dichte oder Dicke untersucht werden. Ebenso können daraus elektromagnetische Eigenschaften abgeleitet werden, da die Dicke oder Dichte der metallischen oder metallisierten Folie den Schwingkreis beeinflusst, sobald die Folie auf die Chipkarte 10 aufgebracht ist.

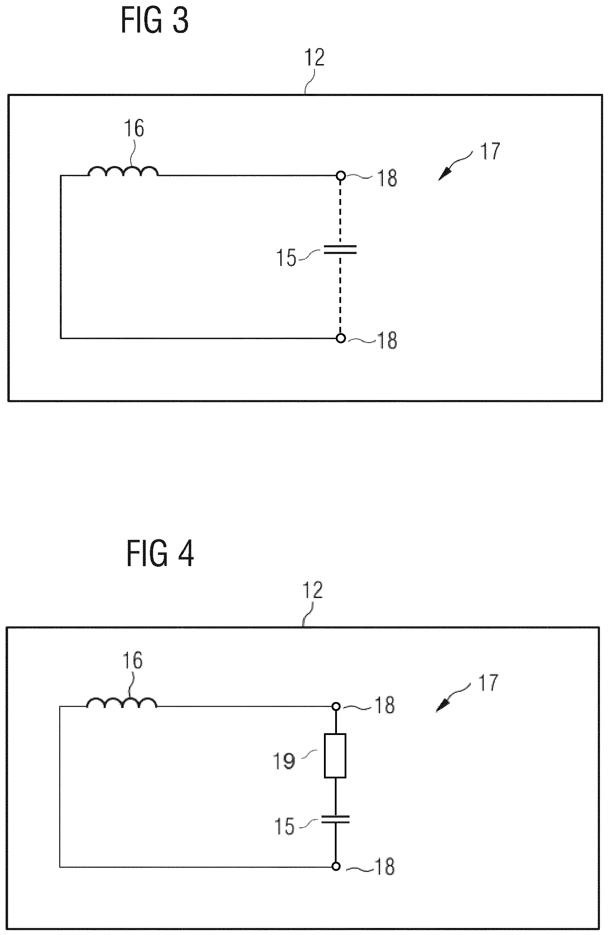

Fig. 3 zeigt ein Ersatzschaltbild eines Chipmoduls 12 der Chipkarte mit einem offenen Schwingkreis 17. Der offene Schwingkreis 17 ist durch die beiden Kontaktpunkte 18 dargestellt. Der hier abgebildete Kondensator 15 entspricht der parasitären Kapazität der metallischen Folie, wenn diese an dem Chipmodul 12 beziehungsweise des Messgeräts angeordnet ist. Die metallische Folie kann bei dem Messen beziehungsweise der Qualitätskontrolle direkt an den beiden Kontaktpunkten 18 anliegen oder in kurzem Abstand angeordnet sein. Der kurze Abstand liegt im Bereich von Millimetern bis zu wenigen Zentimetern.

Statt eines Chipmoduls 12 kann auch eine Platine oder ein ähnlicher Träger für den Schwingkreis 17 verwendet werden. Dann kann der Formfaktor des Messkopfes kleiner sein. Die parasitäre Kapazität der metallischen Folie kann in einem Bereich von etwa 1 pF bis 5 pF liegen. Die kleinere Kapazität erlaubt eine höhere Messgenauigkeit.

Fig. 4 zeigt ein Ersatzschaltbild eines Chipmoduls 12 der Chipkarte mit einem Schwingkreis 17 mit Kondensator 15, Spule 16 und Widerstand 19. In diesem Bespiel wird der Schwingkreis 17 ohne die metallische Folie gebildet. Die metallische Folie ändert allerdings durch ihre Präsenz den Schwingkreis wie zuvor beschrieben wurde.

Statt eines Chipmoduls 12 kann auch eine Platine oder ein ähnlicher Träger für den Schwingkreis 17 verwendet werden. Dann kann der Formfaktor des Messkopfes kleiner sein. Die Kapazität des Kondensators 15 kann in einem Bereich von 1 pF bis etwa 100 pF liegen. Der Wert des Widerstandes 19 kann in einem Bereich von etwa 0 Ohm bis 5 kOhm liegen. Der Schwingkreis 17 kann also auch ohne einen Widerstand aufgebaut sein.

Fig. 4 zeigt eine prinzipielle Darstellung eines Messgeräts 20 zur Qualitätskontrolle einer metallischen Folie 21. Das Messgerät 20 ist ein Impulsmessgerät mit einem Messkopf 22, das zum Aussenden eines Impulses einer elektromagnetischen Schwingung und zum Erfassen einer Schwingungsantwort der Spule 16 in Antwort auf den Impuls eingerichtet ist.

Der Messkopf 22 oder das Messgerät 20 ist eingerichtet, die Antennenspule oder Spule 16 der Chipkarte 10 zu einer Schwingung anzuregen. Eine Auswertungseinrichtung 23 des Messgeräts 20 ist eingerichtet, eine in Antwort auf die Anregung durch den Messkopf 22 oder das Messgerät 20 erfasste Schwingung der Spule 16 auszuwerten.

Mittels einer solchen Auswertungseinrichtung 23 können die Resonanzfrequenz und die Güte der Antennenspule auf einfache und zuverlässige Weise bestimmt werden. Eine Auswertung dieser Parameter lässt dann Rückschlüsse auf die Dicke und/oder Dichte der metallischen Folie 21 zu.

Das Messgerät 20 kann zum Beispiel eine Prüfvorrichtung zum Prüfen der Funktionsfähigkeit der Spule 16 für eine kontaktlos kommunizierende Chipkarte 10 sein oder eine derartige Prüfvorrichtung umfassen. Dazu umfasst das Messgerät 20 einen Impulsgeber 24. Dieser ist eingerichtet, die Spule 16 über eine an den Impulsgeber 24 angeschlossene Erregerspule 25 kontaktlos anzuregen. Weiter umfasst die Messgerät 20 eine Messantenne 26, die wie die Erregerspule 25 in dem Messkopf 22 angeordnet sein kann.

Somit kann eine Prüfvorrichtung zum Prüfen der Funktionsfähigkeit der Spule 16 für die Qualitätskontrolle der metallischen Folie 21 eingesetzt werden. Dazu wird der Messkopf 22 mit der Chipkarte 10 erweitert, so dass die Folie 21 den Schwingkreis des Chipmoduls 12 verändert, was dann gemessen wird. Der Messkopf 22 und die Chipkarte 10 formen gewissermaßen eine Messeinheit für die Folie 21. Anders ausgedrückt wird die Chipkarte 10 als Sensor für die Folie 21 verwendet.

Die Messantenne 26 ist eingerichtet, eine freie, gedämpfte Schwingung der Spule 16 kontaktlos zu erfassen. Die Auswertungseinrichtung 23 ist mit der Messantenne 26 verbunden und eingerichtet, die von der Messantenne 26 erfasste freie, gedämpfte Schwingung auszuwerten.

Die metallische Folie 21 kann zur Messung auf einer Unterlage 27 mit einer Dielektrizitätszahl kleiner 10, vorzugsweise kleiner 5, angeordnet sein. So kann eine POM-Platte als Unterlage verwendet werden. Dieses Material hat eine sehr kleine Dielektrizitätszahl von etwa 4, die zudem konstant über die ganze Plattenoberfläche ist. Damit wird eine definierte Umgebung geschaffen, welche die Testqualität erhöht und verschiedene Testläufe vergleichbarer macht.

Die Messung oder die Qualitätskontrolle kann in einer Bewegungsroute 28 über die Oberfläche der ausgebreiteten metallischen Folie erfolgen. Um eine möglichst gleichmäßige Messung oder Analyse der Folie 21 zu erhalten, wird der Messkopf 22 sowohl in beiden Längsrichtungen als auch diagonal über die Folie 21 bewegt. Der Messkopf 22 kann dabei auf die Folie 21 aufgesetzt werden oder in einem kleinen, definierten Abstand zu der Folie 21 bewegt werden.

Eine möglich Bewegungsroute 28 ist gemäß den Pfeilen in der Fig. 4 dargestellt. Die Bewegung kann links oben in der Ecke starten, zunächst nach rechts und dann nach unten verlaufen. Von der rechten unteren Ecke kann diagonal nach links oben und dann nach links unten verfahren werden. Von dort kann eine zweite diagonale Bewegung nach rechts oben gemacht werden, um dann mittels einer Bewegung nach unten und nach links in die linke untere Ecke abzuschließen.

Ebenso ist es möglich, statt einer vollflächigen Unterlage 27 zwei oder mehr Fäden, Schnüre oder ähnliches zu spannen und dann die metallische Folie 21 darüber zu führen. Auf diese Weise befindet sich fast nur Luft unter oder hinter der Folie und die Dielektrizitätszahl kann noch weiter gesenkt werden. Besonders geeignet ist dies, wenn die metallische Folie 21 als Rollenmaterial vorliegt.

Dann kann die Bewegungsroute 28 entsprechend angepasst und vereinfacht werden. So kann die Bewegung der metallischen Folie 21 mitgenutzt werden. Die Bewegungsroute des Messkopfes 22 erfolgt dann nur noch quer oder senkrecht zu der Vorschubrichtung der metallischen Folie 21. Dabei wird vorzugsweise in beiden Fahrtrichtungen des Messkopfes 22 gemessen. Es ergibt sich dann unter Berücksichtigung der Vorschubbewegung der metallischen Folie 21 ein Zick-Zack förmiges Muster, dass die metallische Folie 21 vollständig abdeckt. Die Vorschubgeschwindigkeit der metallischen Folie 21 und die Geschwindigkeit des Messkopfes 22 können dabei aufeinander abgestimmt sein, um eine vollständige Messung der metallischen Folie 21 zu erreichen.

Die Messung kann mit einer geringen Geschwindigkeit vorgenommen werden, die ausreichend ist, um eine Mindestanzahl an Messpunkten wie zum Beispiel 50,100 oder mehr zu erhalten.

Im Verlauf der Bewegungsroute 28 kann das Aussenden eines Impulses und das Erfassen einer Schwingungsantwort in kontinuierlichen zeitlichen Abständen durchgeführt und das Ergebnis jeweils gesichert werden.

Statt einer kontinuierlichen Bewegungsroute 28 können auch einzelne Messpunkte angefahren werden oder die Folie kann zum Beispiel bei der Herstellung an einem oder mehreren stationären Messköpfen vorbeigeführt werden. Im Fall von Messungen in kontinuierlichen zeitlichen Abständen werden gewissermaßen über den zeitlichen Abstand einzelne Messpunkte vorgegeben, die dann auf der Bewegungsroute 28 liegen.

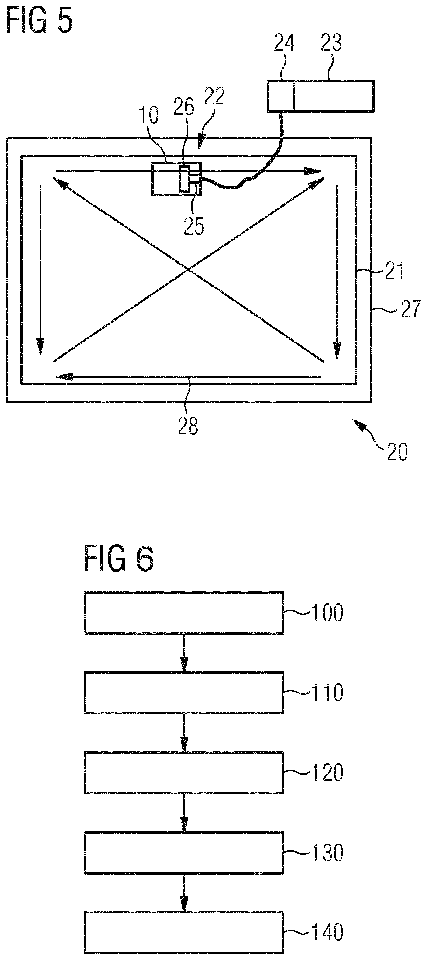

Fig. 5 zeigt ein Flussdiagramm eines Verfahrens zur Qualitätskontrolle einer metallischen Folie 21 eines Kartenkörpers 11 für eine Chipkarte 10.

In einem ersten Schritt 100 erfolgt Anordnen der Referenz-Chipkarte 10 mit der Spule 16 an einem Messkopf 22 des Impuls-Messgeräts 20. Die Referenz-Chipkarte 10 wird definiert an dem Messkopf 22 befestigt, so dass eine eindeutige Lage zu dem Messkopf 22 erreicht wird.

Die Spule 16 der Referenz-Chipkarte 10 und die Erregerspule 25 des Messkopfes 22 sind dabei parallel und überdeckend, vorzugsweise übereinanderliegend das heißt vollständig überdeckend angeordnet. Die Referenz-Chipkarte 10 und der Messkopf 22 sind derart zueinander angeordnet, dass ein Aussenden eines Impulses einer elektromagnetischen Schwingung von der Erregerspule 25 zu der Spule 16 möglich ist und dass ein Erfassen einer Schwingungsantwort der Spule 16 in Antwort auf den Impuls möglich ist.

In einem zweiten Schritt 110 erfolgt ein Kalibrieren der Referenz-Chipkarte 10 durch Aussenden eines Impulses, Erfassen einer Schwingungsantwort der Spule 16 in Antwort auf den Impuls und Bestimmen einer Kalibrierungsgüte aus der Schwingungsantwort. Die Güte der Spule 16 kann zum Beispiel aus einem Abklingkoeffizienten der Schwingungsantwort ermittelt werden. Aus dem Abklingkoeffizienten δ kann die Güte der Spule 16 ermittelt werden. Je länger der Abklingvorgang dauert, desto höher ist die Güte des entsprechenden Schwingkreises. Somit erlaubt eine Auswertung der freien gedämpften Schwingung der Spule 16, das heißt deren Ausschwingen unmittelbar nach der Anregung, die Güte und auch die Eigenresonanzfrequenz der Spule 16 zu bestimmen.

Das Kalibrieren der Referenz-Chipkarte 10 erfolgt in freier Luft, das heißt ohne das Vorhandensein der metallischen Folie 21 in der Nähe des Messkopfes 22 mit der daran angeordneten Referenz-Chipkarte 10. Auf diese Weise wird eine Kalibrierungs- oder Referenzgüte und auch eine Kalibrierungs- oder Referenzresonanzfrequenz der Spule 16 beziehungsweise des Schwingkreises aus der Spule 16 und dem Kondensator 15 bestimmt.

In einem dritten Schritt 120 erfolgt ein Bewegen der Referenz-Chipkarte 10 zu mindestens einem Messpunkt auf der metallischen Folie 21. Die Referenz-Chipkarte 10 wird gemeinsam mit dem Messkopf 22 bewegt. Die Messung oder die Qualitätskontrolle kann in einer Bewegungsroute 28 über die Oberfläche der ausgebreiteten metallischen Folie 21 erfolgen wie in der Fig. 3 beispielhaft dargestellt ist.

In einem vierten Schritt 130 erfolgt ein Aussenden eines Impulses, Erfassen einer Schwingungsantwort der Spule 16 in Antwort auf den Impuls und Bestimmen einer Güte aus der Schwingungsantwort. Dieser Schritt ist analog zu dem Schritt 110 des Kalibrierens, wobei nun die im Bereich der Referenz-Chipkarte 10 vorhandene metallische Folie 21 die Schwingungsantwort der Spule 16 verändert und zwar von Messpunkt zu Messpunkt.

In einem fünften Schritt 140 erfolgt ein Ermitteln einer Dicke und/oder Dichte der metallischen Folie 21 basierend auf der bestimmten Güte. Im Verlauf der Messung wird eine Anzahl von Gütewerten verschiedener Messpunkte über die Folie 21 ermittelt. Dabei zeigen sich üblicherweise typische Einbrüche, die bedeuten, dass bei jedem Einbruch ein vermehrter Auftrag des metallischen Materials oder eine erhöhte Dicke der metallischen Folie 21 vorhanden ist. So kann auf die Dicke und/oder Dichte der metallischen Folie 21 geschlossen werden.

Dabei kann das Ermitteln einer Dicke und/oder Dichte der metallischen Folie 21 basierend auf der bestimmten Güte relativ zu der Kalibrierungsgüte erfolgen. Dies erlaubt einen Vergleich der einzelnen Messpunkte jeweils in Bezug auf die Kalibrierungsmessung oder auch der einzelnen Messpunkte untereinander. So kann eine relative Abweichung der einzelnen Messpunkte und daraus eine Dicke und/oder Dichte der metallischen Folie 21 ermittelt werden.

Andererseits kann das Ermitteln einer Dicke und/oder Dichte der metallischen Folie absolut basierend auf der bestimmten Güte und einer angegebenen Dicke und/oder Dichte der metallischen Folie erfolgen.

Auf diese Weise können absolute Werte der Dicke und/oder Dichte der metallischen Folie 21 bestimmt werden. So können Angaben zu der Dicke und/oder Dichte der metallischen Folie 21 eines oder mehrerer Referenzpunkte gegeben sein. An diesem oder diesen Referenzpunkten erfolgt dann das Kalibrieren der Referenz-Chipkarte 10. Mittels einer Umrechnung über die Abweichung der Messwerte an den Messpunkten kann dann die absolute Dicke und/oder Dichte der metallischen Folie 21 an allen Messpunkten bestimmt werden.

Darüber hinaus können weitere Parameter wie zum Beispiel ein Maximalwert, Minimalwert und Durchschnittswert der Güte oder räumliche Verläufe der Parameter bestimmt werden. Diese Parameter können zum Beispiel für die Erkennung von Fehlern bei der Herstellung der Folie 21 verwendet werden.

## Patentansprüche

1. Verfahren zur Qualitätskontrolle einer metallischen Folie (21) eines Kartenkörpers (11) für eine Chipkarte, umfassend die Schritte:
- Anordnen (100) eines Referenz-Schwingkreises (17) aufweisend eine Spule (16) an einem Messkopf (22) eines Impuls-Messgeräts, das zum Aussenden eines Impulses einer elektromagnetischen Schwingung und zum Erfassen einer Schwingungsantwort der Spule (16) in Antwort auf den Impuls eingerichtet ist;
- Kalibrieren (110) des Referenz- Schwingkreises (17) durch Aussenden eines Impulses, Erfassen einer Schwingungsantwort der Spule (16) in Antwort auf den Impuls und Bestimmen einer Kalibrierungsgüte aus der Schwingungsantwort;
- Relatives Bewegen (120) des Referenz- Schwingkreises (17) zu einer Oberfläche der metallischen Folie (21);
- Aussenden (130) eines Impulses, Erfassen einer Schwingungsantwort der Spule (16) in Antwort auf den Impuls und Bestimmen einer Güte aus der Schwingungsantwort; und
- Ermitteln (140) einer Dicke und/oder Dichte der metallischen Folie (21) basierend auf der bestimmten Güte.

2. Verfahren nach Anspruch 1, **dadurch gekennzeichnet, dass** ein Ermitteln einer Dicke und/oder Dichte der metallischen Folie (21) basierend auf der bestimmten Güte relativ zu der Kalibrierungsgüte erfolgt.

3. Verfahren nach Anspruch 1 oder 2, **dadurch gekennzeichnet, dass** ein Ermitteln einer Dicke und/oder Dichte der metallischen Folie (21) absolut basierend auf der bestimmten Güte und einer angegebenen Dicke und/oder Dichte der metallischen Folie (21) erfolgt.

4. Verfahren nach einem der Ansprüche 1 bis 3, **dadurch gekennzeichnet, dass** die Güte der Spule (16) aus einem Abklingkoeffizienten der Schwingungsantwort ermittelt wird.

5. Verfahren nach einem der Ansprüche 1 bis 4, **dadurch gekennzeichnet, dass** das Aussenden und das Erfassen kontaktlos erfolgt.

6. Verfahren nach einem der Ansprüche 1 bis 5, **dadurch gekennzeichnet, dass** das relative Bewegen in einer Bewegungsroute (28) über die metallische Folie (21) erfolgt und dass in kontinuierlichen zeitlichen Abständen ein Aussenden und Erfassen durchgeführt und das Ergebnis gesichert wird.

7. Verfahren nach einem der Ansprüche 1 bis 6, **dadurch gekennzeichnet, dass** die metallische Folie (21) zur Messung auf einer Unterlage (27) mit einer Dielektrizitätszahl kleiner 10, vorzugsweise kleiner 5, angeordnet wird.

8. Verfahren nach einem der Ansprüche 1 bis 7, **dadurch gekennzeichnet, dass** die metallische Folie (21) auf mindestens einer der beiden Seiten mit einer Folie bedeckt ist.

9. Verfahren nach einem der Ansprüche 1 bis 8, **dadurch gekennzeichnet, dass** die Spule (16) Teil eines RFID-Transponders ist.

10. Verfahren nach einem der Ansprüche 1 bis 9, **dadurch gekennzeichnet, dass** die Messung auf einer Rückseite der metallischen Folie (21) erfolgt.

11. Verfahren nach einem der Ansprüche 1 bis 10, **dadurch gekennzeichnet, dass** die metallische Folie (21) in einer Vorschubrichtung über zwei oder mehr dünne Halterungen bewegt wird, dass das relative Bewegen in einem Winkel zu der Vorschubrichtung erfolgt und dass in kontinuierlichen zeitlichen Abständen ein Aussenden und Erfassen durchgeführt und das Ergebnis gesichert wird.

12. Verfahren nach einem der Ansprüche 1 bis 11, **dadurch gekennzeichnet, dass** der Referenz-Schwingkreis eine Spule (16), einen Kondensator (15) und einen Widerstand (19) aufweist.

13. Verfahren nach einem der Ansprüche 1 bis 12, **dadurch gekennzeichnet, dass** der Referenz-Schwingkreis eine Spule (16) und einen Kondensator (15) einer integrierten Schaltung (14) der Chipkarte (10) aufweist.

## Claims

1. Method for quality control of a metallic foil (21) of a card body (11) for a smart card, comprising the following steps:
- arranging (100) a reference resonant circuit (17) having a coil (16) on a measuring head (22) of a pulse measuring device configured for emitting a pulse of an electromagnetic oscillation and for detecting an oscillation response of the coil (16) in response to the pulse;
- calibrating (110) the reference resonant circuit (17) by emitting a pulse, detecting an oscillation response of the coil (16) in response to the pulse, and determining a calibration quality factor from the oscillation response;
- moving (120) the reference resonant circuit (17) relative to a surface of the metallic foil (21);
- emitting (130) a pulse, detecting an oscillation response of the coil (16) in response to the pulse, and determining a quality factor from the oscillation response; and
- ascertaining (140) a thickness and/or density of the metallic foil (21) based on the determined quality factor.

2. Method according to Claim 1, **characterized in that** ascertaining a thickness and/or density of the metallic foil (21) based on the determined quality factor is effected relative to the calibration quality factor.

3. Method according to Claim 1 or 2, **characterized in that** ascertaining a thickness and/or density of the metallic foil (21) is effected in absolute terms based on the determined quality factor and a specified thickness and/or density of the metallic foil (21).

4. Method according to any of Claims 1 to 3, **characterized in that** the quality factor of the coil (16) is ascertained from a decay coefficient of the oscillation response.

5. Method according to any of Claims 1 to 4, **characterized in that** the emitting and the detecting are effected contactlessly.

6. Method according to any of Claims 1 to 5, **characterized in that** the relative moving is effected in a movement route (28) over the metallic foil (21), and **in that** at continuous time intervals emitting and detecting are carried out and the result is saved.

7. Method according to any of Claims 1 to 6, **characterized in that** the metallic foil (21) is arranged for measurement purposes on a support (27) having a relative permittivity of less than 10, preferably less than 5.

8. Method according to any of Claims 1 to 7, **characterized in that** the metallic foil (21) is covered with a foil on at least one of the two sides.

9. Method according to any of Claims 1 to 8, **characterized in that** the coil (16) is part of an RFID transponder.

10. Method according to any of Claims 1 to 9, **characterized in that** the measurement is effected on a rear side of the metallic foil (21).

11. Method according to any of Claims 1 to 10, **characterized in that** the metallic foil (21) is moved in an advance direction over two or more thin mounts, **in that** the relative moving is effected at an angle with respect to the advance direction, and **in that** at continuous time intervals emitting and detecting are carried out and the result is saved.

12. Method according to any of Claims 1 to 11, **characterized in that** the reference resonant circuit has a coil (16), a capacitor (15) and a resistor (19).

13. Method according to any of Claims 1 to 12, **characterized in that** the reference resonant circuit has a coil (16) and a capacitor (15) of an integrated circuit (14) of the smart card (10).

## Revendications

1. Procédé pour le contrôle qualité d'une feuille métallique (21) d'un corps de carte (11) pour une carte à puce, comprenant les étapes consistant à :
- disposer (100) un circuit oscillant de référence (17) présentant une bobine (16) au niveau d'une tête de mesure (22) d'un appareil de mesure d'impulsion qui est agencé pour émettre une impulsion d'une oscillation électromagnétique et pour détecter une réponse d'oscillation de la bobine (16) en réponse à l'impulsion ;
- étalonner (110) le circuit oscillant de référence (17) en émettant une impulsion, en détectant une réponse d'oscillation de la bobine (16) en réponse à l'impulsion, et en déterminant une qualité d'étalonnage à partir de la réponse d'oscillation ;
- déplacer (120) le circuit oscillant de référence (17) par rapport à une surface de la feuille métallique (21) ;
- émettre (130) une impulsion, détecter une réponse d'oscillation de la bobine (16) en réponse à l'impulsion, et déterminer une qualité à partir de la réponse d'oscillation ; et
- établir (140) une épaisseur et/ou une densité de la feuille métallique (21) sur la base de la qualité déterminée.

2. Procédé selon la revendication 1, **caractérisé en ce qu'**un établissement d'une épaisseur et/ou d'une densité de la feuille métallique (21) est effectué sur la base de la qualité déterminée par rapport à la qualité d'étalonnage.

3. Procédé selon la revendication 1 ou 2, **caractérisé en ce qu'**un établissement d'une épaisseur et/ou d'une densité de la feuille métallique (21) est effectué de manière absolue sur la base de la qualité déterminée et d'une épaisseur et/ou d'une densité indiquées de la feuille métallique (21).

4. Procédé selon l'une quelconque des revendications 1 à 3, **caractérisé en ce que** la qualité de la bobine (16) est établie à partir d'un coefficient d'évanouissement de la réaction d'oscillation.

5. Procédé selon l'une quelconque des revendications 1 à 4, **caractérisé en ce que** l'émission et la détection sont effectuées sans contact.

6. Procédé selon l'une quelconque des revendications 1 à 5, **caractérisé en ce que** le mouvement relatif a lieu sur un trajet de mouvement (28) à travers la feuille métallique (21), et **en ce qu'**une émission et une détection sont effectuées à des intervalles de temps continus, et le résultat est sauvegardé.

7. Procédé selon l'une quelconque des revendications 1 à 6, **caractérisé en ce que** pour la mesure, la feuille métallique (21) est disposée sur un support (27) ayant une constante diélectrique inférieure à 10, de préférence inférieure à 5.

8. Procédé selon l'une quelconque des revendications 1 à 7, **caractérisé en ce que** la feuille métallique (21) est recouverte d'une feuille sur au moins l'une des deux faces.

9. Procédé selon l'une quelconque des revendications 1 à 8, **caractérisé en ce que** la bobine (16) fait partie d'un transpondeur RFID.

10. Procédé selon l'une quelconque des revendications 1 à 9, **caractérisé en ce que** la mesure est effectuée sur une face arrière de la feuille métallique (21).

11. Procédé selon l'une quelconque des revendications 1 à 10, **caractérisé en ce que** la feuille métallique (21) est déplacée dans une direction d'avance par deux ou plusieurs attaches minces, **en ce que** le mouvement relatif est effectué selon un angle par rapport à la direction d'avance, et **en ce qu'**une émission et une détection sont effectuées à des intervalles de temps continus, et le résultat est sauvegardé.

12. Procédé selon l'une quelconque des revendications 1 à 11, **caractérisé en ce que** le circuit oscillant de référence présente une bobine (16), un condensateur (15) et une résistance (19).

13. Procédé selon l'une quelconque des revendications 1 à 12, **caractérisé en ce que** le circuit oscillant de référence présente une bobine (16) et un condensateur (15) d'un circuit intégré (14) de la carte à puce (10).
